# FASCICULE DE BREVET EUROPEEN

(11) **EP 2 641 749 B1**
(45) Date de publication et mention de la délivrance du brevet: **16.12.2015**
(21) Numéro de dépôt: 13001442.6
(22) Date de dépôt: 20.03.2013
(51) Int. Cl.: B60B 1/04, B60B 5/02, B60B 21/04, B60B 21/06

(54) **Jante, son procédé de fabrication et roue de cycle**
Felge, ihr Herstellungsverfahren und Rad eines Fahrrads
Rim, method for manufacturing same and cycle wheel

(30) Priorité: 20.03.2012 FR 1200831
(43) Date de publication de la demande: 25.09.2013
(73) Titulaire: MAVIC S.A.S., 74370 Metz-Tessy (FR)
(72) Inventeur: Righini, Claude, 74290 Veyrier du Lac (FR); Monier, Hugues, 74600 Vleugy (FR)
(74) Mandataire: Rambaud, Pascal

(56) Documents cités:
- EP-A1- 0 390 300
- EP-A1- 2 422 959
- DE-U1- 8 912 606
- FR-A1- 2 933 030
- GB-A- 2 252 275
- US-A1- 2010 090 519

## Description

La présente invention concerne une jante pour roue de cycle, un procédé de fabrication d'une telle jante, ainsi qu'une roue de cycle comprenant une telle jante. L'invention concerne plus spécifiquement les jantes qui sont reliées au moyeu de la roue par des rayons.

De manière classique, une jante pour roue de cycle est de forme annulaire et présente une section radiale en forme de U, avec deux flancs latéraux qui sont globalement perpendiculaires à l'axe de rotation de la roue, ainsi qu'un pont qui relie les flancs latéraux et qui est tourné en regard de l'axe de rotation. Certaines jantes comportent également une paroi transversale qui relie les flancs latéraux, du côté du pneumatique, de sorte que la jante forme un caisson creux annulaire.

Pour diminuer la masse de la jante dans le but de ne pas pénaliser les performances du cycliste, il est connu de fabriquer une jante à partir de fibres synthétiques, généralement des fibres de carbone, qui sont drapées en couches successives et imprégnées d'une résine qui est ensuite cuite ou polymérisée pour former un corps rigide. Les rayons comportent généralement une tête filetée prévue pour être assemblé avec la jante, notamment au niveau du pont de ce corps en carbone.

FR-A-2 702 707 divulgue une jante comprenant un corps en carbone formant un caisson creux et comportant, à l'intérieur du volume du caisson, un noyau annulaire en mousse relativement rigide, notamment à base de polyuréthane. Ce noyau permet une mise en place aisée des couches de carbone, par drapage sur celui-ci de feuilles de fibres de carbone. Pour fixer les rayons à la jante, le corps en carbone est équipé d'un jonc d'appui circonférentiel, disposé à l'intérieur du caisson, en appui contre le pont du corps en carbone. Au niveau de chaque zone de fixation de rayon, un trou traverse la jante de part en part. Ainsi, le pont du corps en carbone, le jonc, le noyau et la paroi transversale du corps sont percés, ce qui augmente les risques de fissuration du corps en carbone. Lors du montage des rayons, la tête filetée des rayons est insérée dans un trou de fixation, au niveau du pont, et un écrou est inséré dans ce trou, du côté de la paroi transversale du corps en carbone. Cette jante est relativement lourde compte tenu de la présence d'un jonc périphérique qui s'étend également entre les zones de fixation des rayons.

EP-A-1 386 756 divulgue une jante réalisée en matériau composite et comportant un noyau poreux. Pour la fixation des rayons, des inserts métalliques taraudés sont pincés entre les flancs latéraux de la jante. Le montage des inserts sur la jante est particulièrement délicat car il est nécessaire de respecter l'orientation des rayons qui ne s'étendent généralement pas exactement selon une direction radiale mais sont inclinés afin de transmettre au mieux l'effort moteur. Par ailleurs, le rendu visuel et l'aérodynamisme de cette solution ne sont pas satisfaisants car les inserts sont apparents.

JP-A-10-157 404 divulgue une jante en carbone comportant un noyau poreux qui n'est pas présent dans la partie adjacente aux zones de fixation des rayons. Un jonc de fixation des rayons est noyé dans les parois de la jante. Ce jonc est recouvert par une paroi intermédiaire reliée aux flancs latéraux de la jante, apportant de la matière à la jante, au détriment de sa légèreté. Cette géométrie particulière est relativement difficile à réaliser avec un noyau, ce qui implique d'employer une vessie gonflable sur laquelle on drape le matériau composite. La vessie n'apporte pas de rigidité à la jante, contrairement à un noyau en mousse qui a généralement des dimensions légèrement supérieures à celle du volume intérieur de la jante, de manière à être comprimé pour rigidifier la jante. Par conséquent, la solidité de cette jante n'est pas optimale. En outre, la présence d'un jonc circonférentiel augmente la masse de la jante.

US-A-2010/0090519 divulgue une jante en matériau composite, qui ne comporte pas de noyau poreux. Pour la fixation des rayons, des inserts sont enveloppés entre deux nappes du matériau composite. Cette jante nécessite donc d'employer une grande quantité de matériau composite pour la fixation des inserts. De plus, pour pouvoir envelopper correctement les inserts entre deux nappes de fibres, les inserts doivent avoir une géométrie globalement trapézoïdale, ce qui implique de surdimensionner les inserts par rapport à des dimensions minimales suffisantes. La jante obtenue est donc relativement lourde. Par ailleurs, deux phases de drapage sont mises en oeuvre, avant et après la mise place des inserts. La rapidité de fabrication n'est donc pas optimisée, ce qui rend cette jante coûteuse. En outre, le positionnement des inserts le long de la circonférence de la jante est délicat, et ne semble pas pouvoir être automatisé.

C'est à ces inconvénients qu'entend plus particulièrement remédier l'invention en proposant une jante en matériau composite ayant une bonne solidité mécanique, tout en étant légère et de fabrication rapide et aisée.

A cet effet, l'invention a pour objet une jante pour roue de cycle selon la revendication 1.

Grâce à l'invention, les inserts contribuent à diminuer la masse de la jante, puisqu'ils ne s'étendent pas sur la totalité de la périphérie de la jante. De plus, il n'est pas nécessaire de percer de part en part la jante au niveau des zones de fixation des rayons, puisque les rayons peuvent être fixés sans percer la paroi transversale du corps de la jante. Par ailleurs, la présence d'un noyau poreux contribue à augmenter la rigidité de la jante et facilite sa fabrication car il n'est pas indispensable d'utiliser un moule pour le drapage des feuilles de fibres synthétiques.

Selon des aspects avantageux mais non obligatoires de l'invention, une telle jante peut incorporer une ou plusieurs des caractéristiques suivantes, prises dans toute combinaison techniquement admissible :
- La paroi transversale du corps n'est pas percée au niveau des zones de fixation des rayons.
- La longueur de chaque insert, mesurée selon une direction orthoradiale de la jante, est supérieure à 15 mm.

L'invention a également pour objet une jante pour roue de cycle, comprenant une telle jante.

En outre, l'invention concerne un procédé de fabrication d'une jante pour roue de cycle qui comporte :
- une étape préliminaire, dans laquelle on découpe dans un noyau annulaire, des encoches de réception des inserts,
- une étape d'assemblage, dans laquelle on dispose chaque insert dans une des encoches,
- une étape de drapage, dans laquelle on réalise le corps de la jante par drapage de couches successives du matériau composite imprégné de résine, contre le noyau et les inserts,
- une étape de durcissage, dans laquelle on fait durcir la résine du matériau composite,
- une étape de perçage, dans laquelle on perce le pont du corps et les inserts pour former les trous taraudés des inserts.

Selon des aspects avantageux mais non obligatoires de l'invention, un tel procédé peut incorporer une ou plusieurs des caractéristiques suivantes, prises dans toute combinaison techniquement admissible :
- Lors de l'étape de perçage, on ne perce pas la paroi transversale du corps de la jante, dans le prolongement du trou taraudé de chaque insert.
- Lors de l'étape préliminaire, on découpe dans le noyau des encoches ayant une forme non complémentaire aux parties latérales des inserts, et on monte les inserts en force dans les encoches lors de l'étape d'assemblage avec les parties latérales qui écrasent la matière constituant le noyau.

L'invention sera mieux comprise et d'autres avantages de celle-ci apparaîtront plus clairement à la lumière de la description qui va suivre d'une jante pour roue de cycle et de son procédé de fabrication, donnée uniquement à titre d'exemple et faite en référence aux dessins annexés dans lesquels :
- la figure 1 est une vue en perspective d'une roue de cycle conforme à l'invention, le pneumatique n'étant pas représenté ;
- la figure 2 est une section partielle selon le plan P2 à la figure 1, à plus grande échelle ;
- la figure 3 est une section analogue à la figure 2, au cours de la fabrication de la jante ;
- les figures 4 et 5 sont des vues en perspective et de face d'un insert faisant partie de la jante ; et
- la figure 6 est une vue latérale d'une portion d'un noyau faisant partie de la jante.

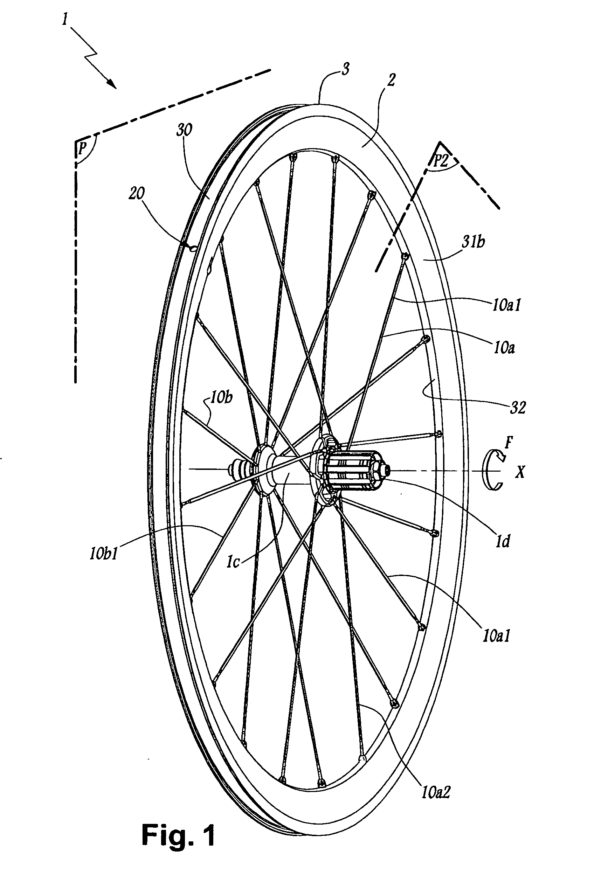

La figure 1 montre une roue arrière 1 de bicyclette, comprenant deux nappes de rayons 10a et 10b reliant une jante 2 à un moyeu 1c de la roue 1. La roue 1 comprend également un pneumatique, non représenté, fixé sur la jante 2. Le moyeu 1c s'étend le long d'un axe de rotation X de la roue 1 et présente une extrémité équipée d'un mécanisme de roue libre 1d assemblé avec une cassette de pignons, non représentée, pour l'entrainement en rotation de la roue 1, selon la flèche F. On note P un plan médian de la roue 1 et de la jante 2, perpendiculaire à l'axe X, définissant un plan de symétrie de la roue 1.

La nappe 10a comporte des rayons tracteurs 10a1, qui tirent sur la jante 2 lorsque le cycliste pédale, et des rayons non tracteurs 10a2 ou rayons pousseurs, qui ont tendance à se détendre lorsque le cycliste pédale. La nappe 10a est menante, ses rayons 10a1 et 10a2 sont accrochés du côté du moyeu 1c qui porte le mécanisme de roue libre 1d et qui reçoit le couple moteur résultant de l'effort de pédalage du cycliste. Au contraire, la nappe 10b qui comporte des rayons 10b1, est menée.

La jante 2 comprend un corps 3 réalisé en matériau composite, notamment des feuilles de fibres de carbone imprégnées d'une résine thermodurcissable. Le corps 3 forme un caisson creux annulaire comportant deux flancs latéraux annulaires 31a et 31b globalement parallèles au plan P, ainsi qu'un pont 32 et une paroi transversale 33 annulaires qui relient entre eux les flancs 31 a et 31 b. Le pont 32 est situé du côté de l'axe de rotation X, tandis que la paroi transversale 33 est située du côté du pneumatique. Le pont 32 est arrondi et son côté convexe est orienté en vis-à-vis de l'axe X. La paroi transversale 33 est globalement perpendiculaire aux flancs 31a et 31b. Le corps 3 délimite ainsi un volume intérieur V annulaire.

Du côté opposé au pont 32, les flancs 31a et 31b dépassent au-delà de la paroi transversale 33 et délimitent, avec la paroi transversale 33, une zone de réception d'un renfort métallique annulaire 30 comportant deux crochets 30a et 30b prévus pour fixer un pneumatique à la jante 2. Le renfort 30 est facultatif. En alternative, d'autres moyens peuvent être prévus pour fixer le pneumatique.

A l'intérieur du volume intérieur V du corps 3, la jante 2 comporte un noyau léger 4 relativement rigide, notamment un noyau poreux réalisé par exemple en mousse de polyuréthane, en polyéthylène, en polypropylène, en époxy, en polychlorure de vinyle (PVC), en styrène-acrylonitrile (SAN) ou en polyéthylène téréphtalate (PET). Le noyau 4 est en contact à la fois avec les flancs latéraux 31a et 31b, le pont 32 et la paroi transversale 33. Le noyau 4 a une densité faible par rapport au corps 3. Par exemple, la densité du Rohacell^{®} est de l'ordre de 52kg/m³.

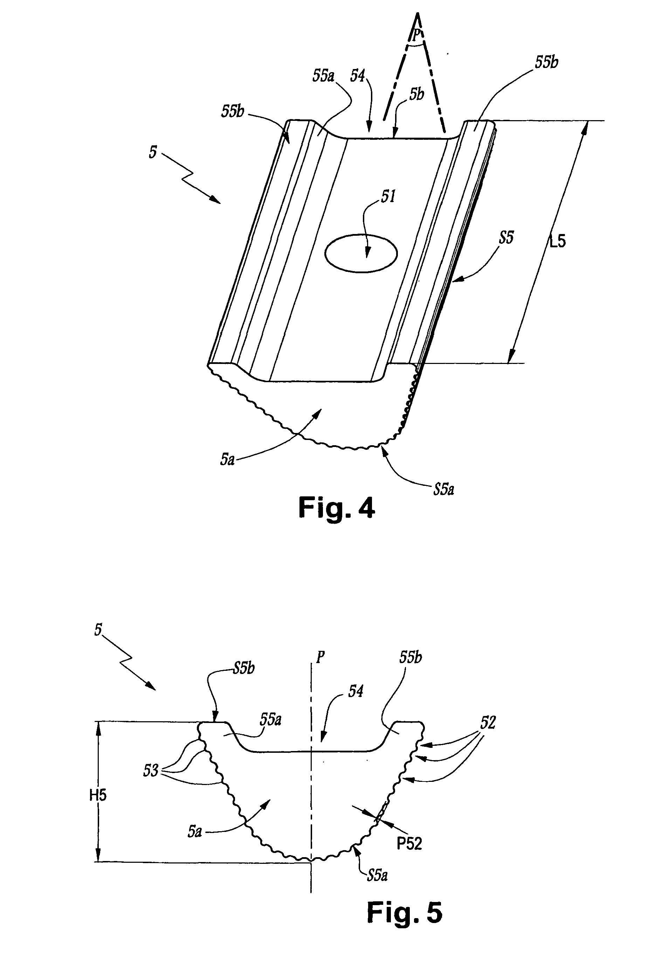

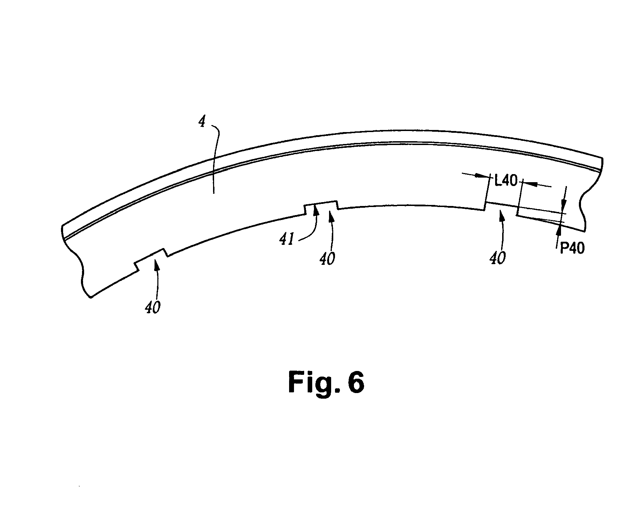

Comme visible à la figure 6, qui montre le noyau 4 séparément, le noyau 4 comporte une encoche 40 au niveau de chaque zone de fixation des rayons, dans lesquelles sont logés des inserts métalliques 5, représentés aux figures 4 et 5. Les inserts 5 sont disposés chacun dans une encoche 40, dans le volume V du corps 3, et ils sont collés contre la surface intérieure S32 du pont 32 du corps 3. Chaque insert 5 comporte un trou taraudé 51 pour la fixation d'une tête 11 d'un rayon 10a1, 10a2 ou 10b1.

Les inserts 5 ont la géométrie d'un prisme droit, dont la surface latérale S5 s'étend en longueur selon une direction orthoradiale de la jante 2 et dont les bases 5a et 5b, en section radiale de la jante 2, ont globalement la forme d'un dôme ou d'un demi-disque dont le sommet est tourné en vis-à-vis de l'axe de rotation X.

La surface latérale S5 de chaque insert 5 comprend une première partie S5a arrondie, collée dans le corps 3, et une deuxième partie S5b plane, en contact avec le noyau 4 et comportant une rainure longitudinale 54.

La forme générale de la première partie S5a de la surface latérale S5 correspond globalement à celle de la surface intérieure S32 du pont 32, de manière à réaliser un contact surfacique. Eventuellement, la hauteur H5 des inserts 5, mesurée dans le plan médian P et selon une direction radiale de la jante 2, est suffisamment importante pour que la surface latérale S5a soit plaquée également contre la partie des flancs 31a et 31b attenante au pont 32.

La première partie S5a de la surface latérale S5 de chaque insert 5 est striée. Elle comporte une pluralité de rainures longitudinales 52 s'étendant parallèlement au plan médian P, selon une direction orthoradiale. Des nervures longitudinales 53 sont formées entre deux rainures 52 successives. Les nervures 53 sont incrustées dans le corps 3, ce qui améliore la tenue des inserts 5 sur le corps 3.

Grâce aux rainures 52 et aux nervures 53, la surface de contact entre les inserts 5 et le corps 3 de la jante 2, qui est réalisée par la première partie S5a de la surface latérale, est augmentée, en comparaison avec un insert qui aurait une surface lisse, ce qui améliore la solidité du collage des inserts 5 sur le corps 3. En particulier, les rainures 52 et les nervures 53 permettent d'augmenter la surface de contact S5a d'environ 20% par rapport à un insert lisse. De préférence, la profondeur P52 des rainures 52 est comprise entre 0,15 et 0,5 mm.

Les dimensions des inserts 5 sont optimisées pour permettre de fixer solidement les rayons. Dans ce but, la longueur L5 de chaque insert 5, mesurée entre les bases 5a et 5b selon une direction orthoradiale, est supérieure à 15 mm. Il est préférable que la longueur L5 ne soit pas trop grande pour ne pas pénaliser la masse de la jante.

La deuxième partie S5b de la surface latérale S5 des inserts 5 est située à l'opposé du sommet de la surface latérale S5a et orientée en vis-à-vis de la paroi transversale 33 du corps 3 de la jante 2. Une encoche 54 s'étend sur toute la longueur des inserts 5, selon une direction orthoradiale de la jante 2, et débouche au niveau des bases 5a et 5b des inserts 5. Les inserts 5 comportent ainsi deux parties latérales longitudinales 55a et 55b, s'étendant de part et d'autre de l'encoche 54. De cette manière, la masse des inserts 5 est réduite tout en conservant une bonne surface de contact entre les inserts 5 et le corps 3, ce qui favorise la tenue des inserts 5. De plus les deux parties latérales longitudinales 55a et 55b constituent des éléments de rigidification de l'insert. En effet, leur présence augmente la section et l'inertie en flexion sans augmenter la masse de l'insert. Le trou taraudé 51 est situé au centre de l'insert 5 et relie le sommet de la surface S5a à la partie centrale de la surface S5b, située entre les parties latérales 55a et 55b.

Chaque rayon 10a1, 10a2 et 10b1 comporte une tige métallique 10c dont l'extrémité opposée au moyeu 1c est équipée d'une tête 11 qui coopère avec un des inserts 5. Au niveau de la tête 11, la tige 1c de chaque rayon 10a1, 10a2 ou 10b1 est filetée. La tête 11 se compose d'un embout 11a fileté extérieurement qui comporte un trou traversant lisse et qui est monté coulissant autour de la tige 1c du rayon. Pour l'arrêt en translation de l'embout 11a, chaque tête 11 comporte une bague d'arrêt 11b qui est fixée à l'extrémité du rayon 10a1, 10a2 ou 10b1. Par exemple, la bague 11b est auto-taraudée par le filetage de la tige 1c du rayon 10a1, 10a2 ou 10b1 lors de son montage.

Grâce aux inserts 5, il n'est pas nécessaire de percer de part en part la jante 2 pour pouvoir fixer les rayons, ce qui limite les risques de fissuration du corps 3. L'utilisation d'un noyau 4 permet d'augmenter la rigidité de la jante 2 et les inserts contribuent à réduire la masse de la jante 2.

En variante, les nervures 52 sont remplacées par des éléments en relief ayant une autre géométrie réalisée par exemple par sablage, par moletage ou par un traitement de surface comme une anodisation phosphorique, chromique ou sulfurique.

La suite de la description concerne un procédé de fabrication de la jante 2 et de la roue 1.

Dans une première étape préliminaire, on fabrique le noyau 4, par exemple à partir d'un profilé poreux rectiligne qui est ensuite cintré. Pour éviter l'apparition de défauts lors du cintrage et faciliter la fabrication du noyau 4, le noyau 4 peut être formé par plusieurs portions de profilés cintrés, par exemple trois portions formant chacune un arc de cercle de 120°. Après avoir donné sa forme annulaire au noyau 4, on réalise les encoches 40, par exemple par découpage.

Dans une deuxième étape préliminaire, on fabrique les inserts 5. Par exemple, ils peuvent être usinés dans une barre de métal qui est ensuite découpée en tronçons pour former plusieurs inserts 5.

Dans une étape d'assemblage, on dispose chaque insert 5 dans une des encoches 40 du noyau 4. Les encoches 40 ont une longueur L40 et une profondeur P40 sensiblement égales à la longueur L5 et à la hauteur H5 des inserts 5, pour pouvoir positionner précisément les inserts 5. Les encoches 40 présentent chacune un fond 41 plan. On ne découpe pas une forme complémentaire aux parties latérales 55a et 55b des inserts 5. De cette manière, lorsqu'on dispose les inserts 5 dans les encoches 40, les parties latérales 55a et 55b écrasent la matière poreuse constituant le noyau 5, ce qui permet aux inserts 5 de tenir en place dans les encoches 40 sans nécessiter de moyens de fixation supplémentaires. La fabrication de la jante 2 s'en trouve facilitée.

Dans une étape de drapage, on réalise le corps 3 par drapage de couches successives d'un matériau composite contre le noyau 4 et les inserts 5, notamment des feuilles de fibres de carbone. Le drapage est effectué directement sur le noyau 4 et les inserts 5, il n'est pas nécessaire d'employer un moule pour définir la forme du corps 3. La cohésion entre les feuilles de carbone est obtenue grâce à une résine thermodurcissable. Les feuilles de carbone peuvent être préalablement imprégnées de cette résine ou la résine peut être déposée sur des feuilles de carbone non imprégnées.

Eventuellement, on peut disposer un nombre plus important de couches de carbone au niveau des zones de fixation des rayons, pour augmenter la résistance mécanique de la jante 2 au niveau des zones les plus sollicitées.

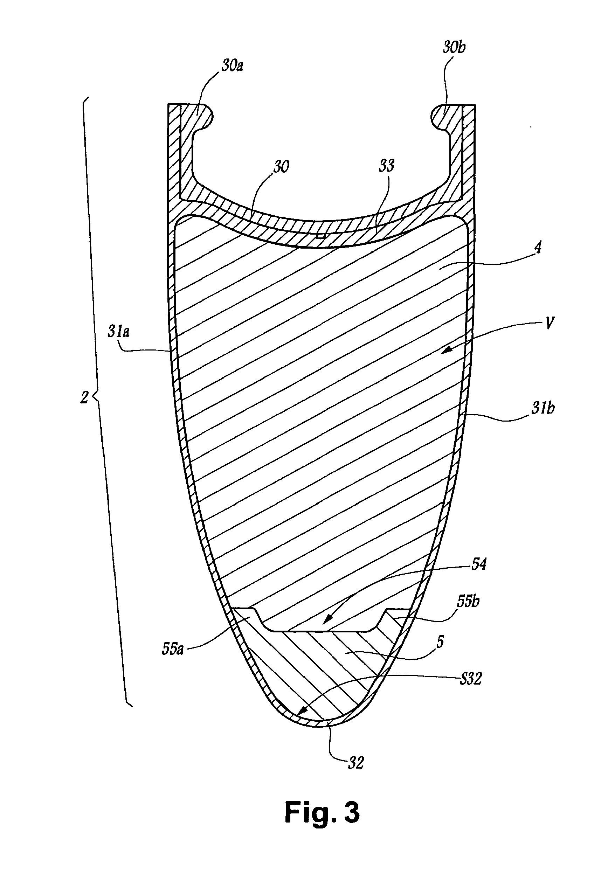

Dans le cas où on utilise un renfort métallique 30 pour la fixation du pneumatique, on drape d'abord les feuilles de carbone autour du renfort 30. Puis, on pose le noyau contre les feuilles de carbone et on finalise le drapage autour du noyau 4 et des inserts 5, comme représente à la figure 3.

Dans une étape de durcissage, on fait durcir la résine du matériau composite. Par exemple, on place l'ensemble formé par le corps 3, le noyau 4 et les inserts 5 dans un moule que l'on met au four, à une température adaptée à la résine choisie. A la sortie du four, on fait refroidir la jante 2.

Dans une étape de perçage, on perce et taraude la jante 2 au niveau de chaque insert 5 pour former les trous taraudés 51 des inserts 5. Ces trous 51 traversent en premier le pont 32 lors du perçage. Il est envisageable de percer également le noyau 4, dans le prolongement des trous 51 des inserts 5, pour réaliser un volume creux de réception de la bague d'arrêt 11b. Toutefois, on ne perce pas la paroi transversale 33 du corps 3 dans le prolongement des trous 51, pour ne pas le fragiliser.

Pour percer la jante 2 au centre des inserts 5, on peut s'aider d'un dispositif de détection inductif pour déterminer la position angulaire des inserts 5 le long de la circonférence de la jante.

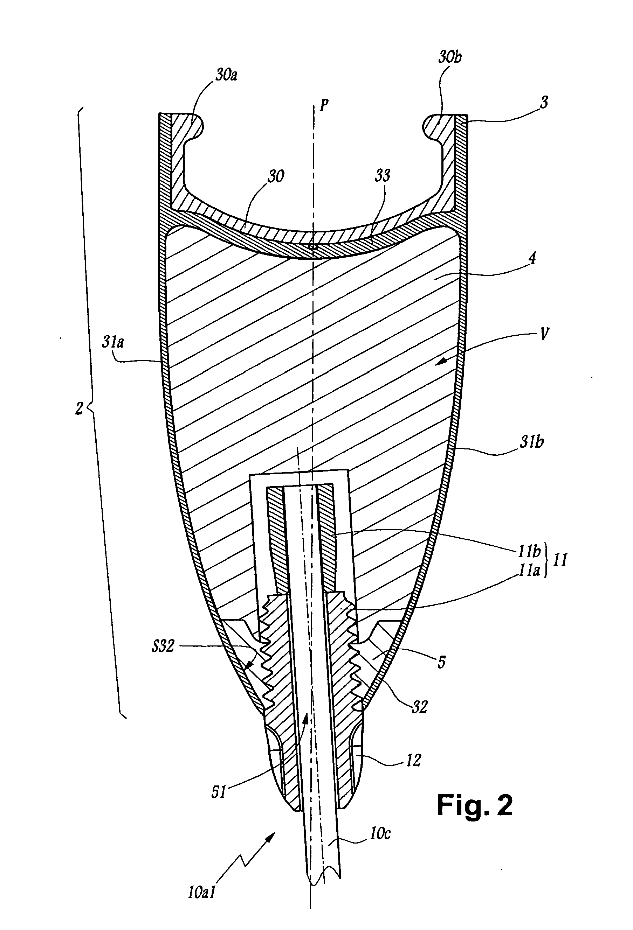

Comme visible aux figures 1 et 2, les rayons 10a1 et 10a2 de la nappe menante 10a ne s'étendent pas exactement selon une direction radiale mais sont tangents au moyeu 1c afin de transmettre au mieux l'effort moteur du cycliste à la jante 2. Etant donné que les inserts 5 sont solidaires de la jante 2 lors du perçage, il est aisé de percer les trous 51 selon la direction exacte des rayons 10a1, 10a2 et 10b1.

La jante 2 comporte un trou de valve 20 qui traverse la jante 2 de part en part. Ce trou 20 constitue le seul perçage réalisé dans la paroi transversale 33. La paroi transversale 33 n'est pas percée au niveau des zones de fixation des rayons 10a1, 10a2 et 10b1.

Dans une étape de montage de la roue 1, on assemble le moyeu 1c et les rayons 10a1, 10a2 et 10b1 à la jante 2. Pour fixer la tête 11 des rayons 10a1, 10a2 et 10b1 à la jante 2, on visse les embouts 11a dans les trous 51 des inserts 5. La partie des embouts filetés 11a opposée à la bague d'arrêt 11b comporte une empreinte d'outil 12 pour le vissage des rayons 10a1, 10a2 et 10b1, ce qui permet de mettre sous tension les rayons.

Ce procédé de fabrication est simple et rapide à mettre en oeuvre.

## Revendications

1. Jante (2) pour roue (1) de cycle, comprenant :
- un corps (3) constitué d'un matériau composite et présentant, en section radiale, une forme de caisson creux délimitant un volume (V) et comportant deux flancs latéraux (31a, 31b), un pont (32) qui relie les flancs et qui est situé en regard d'un axe de rotation (X) de la roue (1), ainsi qu'une paroi transversale (33) qui relie les flancs latéraux (31a, 31b) à l'opposé du pont (32),
- un noyau (4) disposé dans le volume (V),
**caractérisée en ce qu'**elle comprend en outre des inserts métalliques (5) disposés dans des encoches (40) du noyau (4), au contact du pont (32) du corps (3), comportant chacun un trou taraudé (51) de fixation d'un rayon (10a1, 10a2, 10b1) de la roue (1) prolongé au travers du pont (32), **en ce que** chaque insert (5) comporte une encoche (64) et deux parties latérales (55a, 55b) s'étendant de part et d'autre de l'encoche (54), en contact avec le corps (3) de la jante (2), et **en ce que** la surface (S5a) de chaque insert (5) qui est au contact du corps (3) de la jante (2) comporte des éléments en reliefs (52) qui sont constitués par des nervures (52) s'étendant en longueur le long de la circonférence de la jante (2), lorsque les inserts (5) sont montés dans la jante (2).

2. Jante (2) selon la revendication 1, **caractérisé en ce que** la paroi transversale (33) du corps (3) n'est pas percée au niveau des zones de fixation des rayons (10a1, 10a2, 10b1).

3. Jante (2) selon la revendication 1, **caractérisé en ce que** la longueur (L5) de chaque insert (5), mesurée selon une direction orthoradiale de la jante (2), est supérieure à 15 mm.

4. Roue de cycle (1), **caractérisée en ce qu'**elle comprend une jante (2) selon l'une des revendications précédentes.

5. Procédé de fabrication d'une jante (2) pour roue de cycle selon l'une des revendications 1 à 4, **caractérisé en ce qu'**il comporte :
- une étape préliminaire, dans laquelle on découpe dans un noyau annulaire (4), des encoches (40) de réception des inserts (5),
- une étape d'assemblage, dans laquelle on dispose chaque insert (5) dans une des encoches (40),
- une étape de drapage, dans laquelle on réalise le corps (3) de la jante (2) par drapage de couches successives du matériau composite imprégné de résine, contre le noyau (4) et les inserts (5),
- une étape de durcissage, dans laquelle on fait durcir la résine du matériau composite,
- une étape de perçage, dans laquelle on perce le pont (32) du corps (3) et les inserts (5) pour former les trous taraudés (51) des inserts (5).

6. Procédé selon la revendication 5, **caractérisé en ce que** lors de l'étape de perçage, on ne perce pas la paroi transversale (33) du corps (3) de la jante (2), dans le prolongement du trou taraudé (51) de chaque insert (5).

7. Procédé selon l'une des revendications 5 ou 6 pour la fabrication d'une jante (2) selon la revendication 6, **caractérisé en ce que**, lors de l'étape préliminaire, on découpe dans le noyau (4) des encoches (40) ayant une forme non complémentaire aux parties latérales (55a, 55b) des inserts (5), et on monte les inserts (5) en force dans les encoches (40) lors de l'étape d'assemblage avec les parties latérales (55a, 55b) qui écrasent la matière constituant le noyau (4).

## Patentansprüche

1. Felge (2) für Rad (1) eines Fahrrads, die Folgendes umfasst:
- einen Körper (3), der aus einem Verbundwerkstoff besteht und im radialen Schnitt eine Hohlkastenform aufweist, die ein Volumen (V) abgrenzt, und zwei Seitenflanken (31a, 31b), eine Brücke (32), die die Flanken vereint und die gegenüber einer Rotationsachse (X) des Rads (1) liegt, umfasst, sowie eine Querwand (33), die die Seitenflanken (31a, 31b) gegenüber der Brücke (32) verbindet,
- einen Kern (4), der in dem Volumen (V) angeordnet ist,
**dadurch gekennzeichnet, dass** sie außerdem Metalleinsätze (5) umfasst, die in Kerben (40) des Kerns (4) in Berührung mit der Brücke (32) des Körpers (3) angeordnet sind, die jeweils eine Gewindebohrung (51) zum Befestigen einer Speiche (10a1, 10a2, 10b1) des Rads (1) umfassen, durch die Brücke (32) hindurch verlängert, dass jeder Einsatz (5) eine Kerbe (54) und zwei Seitenteile (55a, 55b) umfasst, die sich zu beiden Seiten der Kerbe (54) erstrecken, in Berührung mit dem Körper (3) der Felge (2), und dass die Oberfläche (S5a) jedes Einsatzes (5), die mit dem Körper (3) der Felge (2) in Berührung ist, Reliefelemente (52) umfasst, die aus Rippen (52) bestehen, die sich längs entlang des Umfangs der Felge (2) erstrecken, wenn die Einsätze (5) in die Felge (2) montiert sind.

2. Felge (2) nach Anspruch 1, **dadurch gekennzeichnet, dass** die Querwand (33) des Körpers (3) im Bereich der Befestigungszonen der Speichen (10a1, 10a2, 10b1) nicht durchbohrt ist.

3. Felge (2) nach Anspruch 1, **dadurch gekennzeichnet, dass** die Länge (L5) jedes Einsatzes (5), entlang einer orthoradialen Richtung der Felge (2) gemessen, größer ist als 15 mm.

4. Fahrradrad (1), **dadurch gekennzeichnet, dass** es eine Felge (2) nach einem der vorhergehenden Ansprüche umfasst.

5. Herstellungsverfahren einer Felge (2) für Fahrradrad nach einem der Ansprüche 1 bis 4, **dadurch gekennzeichnet, dass** es Folgendes umfasst:
- einen vorausgehenden Schritt, bei dem man aus einem ringförmigen Kern (4) Kerben (40) zum Aufnehmen der Einsätze (5) ausschneidet,
- einen Zusammenfügeschritt, bei dem man jeden Einsatz (5) in einer der Kerben (40) anordnet,
- einen Drapierschritt, bei dem man den Körper (3) der Felge (2) durch Drapieren aufeinanderfolgender Schichten des Verbundwerkstoffs, der mit Harz getränkt ist, gegen den Kern (4) und die Einsätze (5) ausführt,
- einen Aushärtschritt, bei dem man das Harz des Verbundwerkstoffs aushärtet,
- einen Bohrschritt, bei dem man die Brücke (32) des Körpers (3) und die Einsätze (5) durchbohrt, um die Gewindebohrungen (51) der Einsätze (5) zu bilden.

6. Verfahren nach Anspruch 5, **dadurch gekennzeichnet, dass** man beim Bohrschritt die Querwand (33) des Körpers (3) der Felge (2) in der Verlängerung der Gewindebohrung (51) jedes Einsatzes (5) nicht bohrt.

7. Verfahren nach einem der Ansprüche 5 oder 6 zur Herstellung einer Felge (2) nach Anspruch 6, **dadurch gekennzeichnet, dass** man bei dem vorausgehenden Schritt aus dem Kern (4) Kerben (40) ausschneidet, die eine nicht komplementäre Form zu den Seitenteilen (55a, 55b) der Einsätze (5) haben, und man die Einsätze (5) unter Kraftanwendung in die Kerben (40) bei dem Zusammenfügeschritt mit den Seitenteilen (55a, 55b), die das Material, das den Kern (4) bildet, zerquetschen, montiert.

## Claims

1. Rim (2) for a cycle wheel (1), comprising:
- a body (3) consisting of a composite material and having, in radial section, a hollow box-section form delimiting a volume (V) and comprising two lateral flanks (31a, 31b), a bridge (32) which links the flanks and which is situated facing an axis of rotation (X) of the wheel (1), and a transverse wall (33) which links the lateral flanks (31a, 31b) opposite the bridge (32),
- a core (4) arranged in the volume (V),
**characterized in that** it further comprises metal inserts (5) arranged in notches (40) of the core (4), in contact with the bridge (32) of the body (3), each comprising a tapped hole (51) for fixing a spoke (10a1, 10a2, 10b1) of the wheel (1) prolonged through the bridge (32), **in that** each insert (5) comprises a notch (54) and two lateral parts (55a, 55b) extending on either side of the notch (54), in contact with the body (3) of the rim (2), and **in that** the surface (S5a) of each insert (5) which is in contact with the body (3) of the rim (2) comprises relief elements (52) which consist of ridges (52) extending lengthwise along the circumference of the rim (2), when the inserts (5) are mounted in the rim (2).

2. Rim (2) according to Claim 1, **characterized in that** the transverse wall (33) of the body (3) is not pierced in the zones of fixing of the spokes (10a1, 10a2, 10b1).

3. Rim (2) according to Claim 1, **characterized in that** the length (L5) of each insert (5), measured in an orthoradial direction of the rim (2), is greater than 15 mm.

4. Cycle wheel (1), **characterized in that** it comprises a rim (2) according to one of the preceding claims.

5. Method for manufacturing a rim (2) for a cycle wheel according to one of claims 1 to 4, **characterized in that** it comprises:
- a preliminary step, in which notches (40) for receiving inserts (5) are cut into an annular core (4),
- a step of assembly, in which each insert (5) is arranged in one of the notches (40),
- a hardening step, in which the body (3) of the rim (2) is produced by drape moulding successive layers of the composite material impregnated with resin, against the core (4) and the inserts (5),
- a drape moulding step, in which the resin of the composite material is made to harden,
- a drilling step, in which the bridge (32) of the body (3) and the inserts (5) are drilled to form the tapped holes (51) of the inserts (5).

6. Method according to Claim 5, **characterized in that**, during the drilling step, the transverse wall (33) of the body (3) of the rim (2) is not drilled in the extension of the tapped hole (51) of each insert (5).

7. Method according to one of Claims 5 and 6 for the manufacturing of a rim (2) according to Claim 6, **characterized in that**, during the preliminary step, notches (40) are cut in the core (4) that have a form that does not complement the lateral parts (55a, 55b) of the inserts (5), and the inserts (5) are force-fitted in the notches (40) during the step of assembly with the lateral parts (55a, 55b) which squeeze the material forming the core (4).
